# EUROPEAN PATENT APPLICATION

(11) **EP 4 716 367 A1**
(43) Date of publication of application: **25.03.2026**
(21) Application number: 24860231.0
(22) Date of filing: 06.08.2024
(51) Int. Cl.: H05B 6/64, G01J 5/48, G08B 21/18, F24C 7/08, G06T 7/11, G06T 7/70, G06N 20/00

(54) **COOKING DEVICE AND CONTROL METHOD THEREFOR**

(30) Priority: 28.08.2023 KR 20230113137; 22.11.2023 KR 20230163032
(71) Applicant: Samsung Electronics Co., Ltd., Suwon-si, Gyeonggi-do 16677 (KR)
(72) Inventor: ROH, Mindo, Suwon-si Gyeonggi-do 16677 (KR); KA, Keehwan, Suwon-si Gyeonggi-do 16677 (KR); JEON, Hyeongi, Suwon-si Gyeonggi-do 16677 (KR)
(74) Representative: Gulde & Partner
(86) International application number: PCT/KR2024/011620
(87) International publication number: WO 2025/048310

(57) **Abstract**

A cooking device for cooking food by using electromagnetic waves is disclosed. The cooking device comprises: a thermographic camera; a memory for storing one or more instructions; and one or more processors, wherein the one or more processors execute one or more instructions so as to: obtain a thermal image obtained by capturing a turntable, on which food is placed, by using the thermographic camera; segment, into a plurality of regions, at least one region included in each of a plurality of frames included in the thermographic image; correct positions of the plurality of regions in each of the plurality of frames on the basis of the rotational angle of the turntable corresponding to the point in time at which each of the plurality of frames is obtained; identify, in the plurality of frames, one region in the current frame on the basis of temperature information about the plurality of regions in which the positions are corrected; and identify representative temperature information about the food by applying a weight to the temperature information about one region identified in the current frame.

## Description

### [Technical Field]

The disclosure relates to a cooking device and a control method therefor, and more particularly to a cooking device that cooks food using electromagnetic waves and a control method therefor.

### [Background Art]

Various types of electronic devices are being developed and distributed due to advancements in electronic technology. Specifically, microwave ovens that are used in various locations such as homes and restaurants have been under continuous development for several years recently.

Typically, a microwave oven may refer to a device that heats moisture in food products contained inside a cooking chamber using electromagnetic waves (or microwaves) generated from a magnetron to carry out cooking of a food product.

### [Disclosure]

### [Technical Solution]

According to one or more embodiments, a cooking device that cooks food using electromagnetic waves includes a thermographic camera, memory storing one or more instructions, and one or more processors, and the one or more processors, by executing the one or more instructions, cause the cooking device to obtain a thermographic image that captured a turn table on which a cooking product is placed using the thermographic camera, segment at least one area included in each of a plurality of frames included in the thermographic image into a plurality of areas, correct positions of the plurality of areas in each of the plurality of frames based on a rotation angle of the turn table corresponding to a time-point at which each of the plurality of frames is obtained, identify, in the plurality of frames, one area in a current frame based on temperature information of a plurality of areas with the positions corrected, and identify representative temperature information of the cooking product by applying weight values to temperature information of the identified one area in the current frame.

According to one or more embodiments, the one or more processors, by executing the one or more instructions, cause the cooking device to identify, based on the one area being identified in the current frame, representative temperature information of the cooking product based on temperature information for each area included in the identified one area and weight value information.

According to one or more embodiments, the one or more processors, by executing the one or more instructions, cause the cooking device to add, based on each of the plurality of frames being segmented into a plurality of areas, a first indicator to an area with a temperature value greater than or equal to a threshold value from among the plurality of areas and add a second indicator to an area with a temperature value less than the threshold value from among the plurality of areas, and identify, based on positions of the plurality of areas being corrected in the plurality of frames based on a rotation angle of the turn table, the one area in the current frame by combining the first indicator or the second indicator corresponding to the plurality of areas with the positions corrected in the plurality of frames.

According to one or more embodiments, the one or more processors, by executing the one or more instructions, cause the cooking device to add, based on each of the plurality of frames being segmented into a plurality of areas, a value of "1" to an area with a temperature value greater than or equal to a threshold value from among the plurality of areas and add a value of "0" to an area with a temperature value less than the threshold value from among the plurality of areas, and add, based on positions of the plurality of areas being corrected in the plurality of frames based on a rotation angle of the turn table, a value of "1" or a value of "0" corresponding to the plurality of areas with the positions corrected in the plurality of frames, and identify the one area in the current frame based on a sum value corresponding to each of the plurality of areas.

According to one or more embodiments, the one or more processors, by executing the one or more instructions, cause the cooking device to identify, based on the one area being identified in the current frame, weight values for each area according to the sum value for each of the plurality of areas included in the one area, and identify representative temperature information of the cooking product by applying different weight values to temperature information for each area in the current frame.

According to one or more embodiments, the one or more processors, by executing the one or more instructions, cause the cooking device to identify a rotation angle of the turn table based on a time interval at which the plurality of frames is obtained and a rotation speed of the turn table, and correct positions of the plurality of areas by rotating the plurality of frames based on a rotation angle of the turn table corresponding to each of the plurality of frames.

According to one or more embodiments, the one or more processors, by executing the one or more instructions, cause the cooking device to obtain at least one of weight value information or temperature information of the one area by inputting the plurality of frames and rotation angle information of the turn table corresponding to the plurality of frames in a trained artificial intelligence model.

According to one or more embodiments, the one or more processors, by executing the one or more instructions, cause the cooking device to identify a representative temperature of the cooking product based on a cooking type set according to a user command and temperatures for each identified area in the current frame, and identify whether a representative temperature of the cooking product reached a target temperature, and end cooking when a representative temperature of the cooking product is identified as having reached the target temperature.

According to one or more embodiments, the one or more processors, by executing the one or more instructions, cause the cooking device to identify, based on representative temperature information of the cooking product being identified, and based on an area of less than a threshold size with a difference greater than or equal to a threshold temperature with the representative temperature information being identified from at least one of an inner area or an outer area of the identified one area, relevant area as a contaminant area, and provide guide information for the identified contaminant area.

According to one or more embodiments, the one or more processors, by executing the one or more instructions, cause the cooking device to identify which positions from among a camera, a turn table, or a cavity wall are positions of contaminants at based on at least one of whether there is rotation of the identified contaminant area and whether there is a temperature change in the plurality of frames, and provide guide information for positions of the identified contaminants.

According to one or more embodiments, a control method of a cooking device that cooks food using electromagnetic waves includes obtaining a thermographic image that captured a turn table on which a cooking product is placed using a thermographic camera, segmenting at least one area included in each of a plurality of frames included in the thermographic image into a plurality of areas, correcting positions of the plurality of areas in each of the plurality of frames based on a rotation angle of the turn table corresponding to a time-point at which each of the plurality of frames is obtained, identifying, in the plurality of frames, one area in a current frame based on temperature information of a plurality of areas with the positions corrected, and identifying representative temperature information of the cooking product by applying weight values to temperature information of the identified one area in the current frame.

According to one or more embodiments, a non-transitory computer-readable medium that stores computer instructions for a cooking device to perform an operation when executed by a processor of the cooking device that cooks food using electromagnetic waves, the operation of which includes obtaining a thermographic image that captured a turn table on which a cooking product is placed using a thermographic camera, segmenting at least one area included in each of a plurality of frames included in the thermographic image into a plurality of areas, correcting positions of the plurality of areas in each of the plurality of frames based on a rotation angle of the turn table corresponding to a time-point at which each of the plurality of frames is obtained, identifying, in the plurality of frames, one area in a current frame based on temperature information of a plurality of areas with the positions corrected, and identifying representative temperature information of the cooking product by applying weight values to temperature information of the identified one area in the current frame.

### [Description of Drawings]

Aspects, features, and advantages described above or different from specific embodiments of the disclosure will be made clearer from the following descriptions with reference to the accompanied drawings.
FIG. 1A to FIG. 1C are diagrams illustrating a structure and operation of a microwave oven to assist in the understanding of the disclosure.
FIG. 2A is a block diagram illustrating a configuration of a cooking device according to one or more embodiments.
FIG. 2B is a block diagram illustrating a detailed configuration of a cooking device according to one or more embodiments.
FIG. 3 is a flowchart illustrating a control method of a cooking device according to one or more embodiments.
FIG. 4 is a diagram illustrating a method for obtaining representative temperature information of food products according to one or more embodiments.
FIG. 5 is a flowchart illustrating a control method of a cooking device according to one or more embodiments.
FIG. 6 is a diagram illustrating a method for obtaining temperature information of a cooking product area according to one or more embodiments.
FIG. 7A and FIG. 7B are diagrams illustrating a method for obtaining temperatures of a cooking product area according to one or more embodiments.
FIG. 8 is a flowchart illustrating a control method of a cooking device according to one or more embodiments.
FIG. 9 is a diagram illustrating a method for detecting contaminants according to one or more embodiments.
FIG. 10A and FIG. 10B are diagrams illustrating a method for detecting contaminants according to one or more embodiments.
FIG. 11A and FIG. 11B are diagrams illustrating a method for detecting contaminants according to one or more embodiments.

### [Mode for Invention]

Terms used in the disclosure will be briefly described, and the disclosure will be described in detail.

The terms used in an embodiment of the disclosure may be general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the relevant description. Accordingly, the terms used herein are not to be understood simply as its designation but based on the meaning of the term and the overall context of the disclosure.

In the disclosure, expressions such as "have", "may have", "include", and "may include" are used to designate a presence of a relevant characteristic (e.g., elements such as numerical value, function, operation, or component), and not to preclude a presence or a possibility of additional characteristics.

In the disclosure, expressions such as "A or B", "at least one of A and/or B", or "one or more of A and/or B" may include all possible combinations of the items listed together. For example, "A or B", "at least one of A and B", or "at least one of A or B" may refer to all cases including (1) only A, (2) only B, or (3) both A and B.

Expressions such as "1st", "2nd", "first", or "second" used in the disclosure may limit various elements regardless of order and/or importance, and may be used merely to distinguish one element from another element and not limit the relevant element.

When a certain element (e.g., a first element) is indicated as being "(operatively or communicatively) coupled with/to" or "connected to" another element (e.g., a second element), it may be understood as the certain element being directly coupled with/to the another element or as being coupled through other element (e.g., a third element).

The expression "configured to... (or set up to)" used in the disclosure may be used interchangeably with, for example, "suitable for...", "having the capacity to...", "designed to...", "adapted to...", "made to...", or "capable of..." based on circumstance. The term "configured to... (or set up to)" may not necessarily mean "specifically designed to" in terms of hardware.

In a certain circumstance, the expression "a device configured to..." may mean something that the device "may perform..." together with another device or components. For example, a phrase "a processor configured to (or set up to) perform A, B, or C" may mean a dedicated processor for performing a relevant operation (e.g., an embedded processor), or a generic-purpose processor (e.g., a central processing unit (CPU) or an application processor) capable of performing the relevant operations by executing one or more software programs stored in a memory device.

A singular expression includes a plural expression, unless otherwise specified. It is to be understood that the terms such as "configured" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used in the embodiments herein perform at least one function or operation, and may be implemented with hardware or software, or implemented with a combination of hardware and software. In addition, a plurality of "modules" or a plurality of "parts", except for a "module" or a "part" which needs to be implemented with a specific hardware, may be integrated in at least one module and implemented as at least one processor (not shown).

Meanwhile, the various elements and areas in the drawings have been schematically illustrated. Accordingly, the technical spirit of the disclosure is not limited by relative sizes and distances illustrated in the accompanied drawings.

An embodiment of the disclosure will be described in greater detail below with reference to the accompanied drawings.

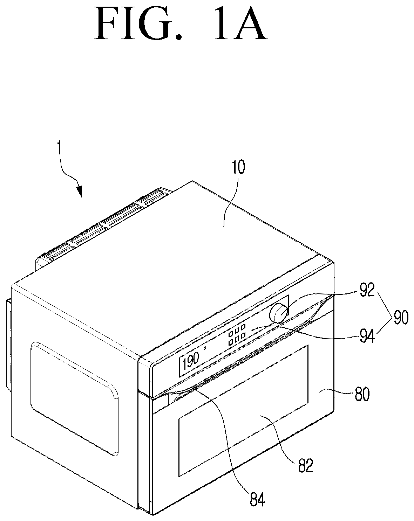

FIG. 1A to FIG. 1C are diagrams illustrating a structure and operation of a microwave oven to assist in the understanding of the disclosure.

Referring to FIG. 1A to FIG. 1C, a microwave oven 1 may be formed in a rough cuboid shape provided with a cooking chamber 22 inside thereof, and an outer shape of both side surfaces and a top surface may be formed by a sub-case 10. The sub-case 10 may be formed such that a sheet material having a predetermined width and thickness is bent and formed, and may be coupled with a back surface plate 12 that forms an outer back surface and a bottom surface plate 14 that forms an outer bottom surface of the microwave oven 1. At a top side of the bottom surface plate 14, a cavity 20 forming the cooking chamber 22, which is a space in which a food product is cooked, may be provided. The cavity 20 may be formed in a cuboid box shape with a front surface thereof opened in a size that is containable inside of an outer case 10. In other words, the cavity 20 may be formed in a box shape with the sheet material that forms at least one surface which are bonded together, and with the cooking chamber 22 formed in the opened inside thereof.

At a ceiling of the cooking chamber 22, a heater 40 for heating the food product contained in the cooking chamber 22 with radiant heat may be provided. A sheathe heater may be typically used for the heater 20, and electric heaters of various forms such as a ceramic heater and a halogen heater may be used according to necessity. The heater 40 may be fixed to a top cavity 24 which forms a top surface of the cavity 20 so as to be exposed inside of the cooking chamber 22.

Meanwhile, at a bottom of the cooking chamber 22, a turn table 32 which supports a container in which the food product is contained may be provided. At a bottom side of the turn table 32, a turn table motor 33 may be provided. The turn table motor 33 may provide driving force for rotation of the turn table 32 when the food product is being cooked inside of the cooking chamber 22. The turn table motor 33 may be stopped when the food product is kept warm inside of the cooking chamber 22, and unnecessary power consumption may be prevented. At a side surface of the cooking chamber 22, a cooking chamber lamp 35 may be further provided. The cooking chamber lamp 35 may irradiate, when the food product is being cooked inside the cooking chamber, light to the inside of the cooking chamber 22 to inform a user of a cooking state of the food product. The cooking chamber lamp 35 may be turned off when the food product is kept warm inside the cooking chamber 22, and unnecessary power consumption may be prevented.

In addition, at a center part of a back cavity 26 that forms a back surface of the cooking chamber 22, suction holes 28 through which air inside of the cooking chamber 22 is suctioned may be perforated in plurality, and at an inner side of an edge of the back cavity 26, discharge holes 29 through which heat generated by a convection heater 62 is discharged to the inside of the cooking chamber 22 may be perforated in plurality.

Meanwhile, at the top cavity 24 and the back cavity 26, an electronic equipment chamber 30 may be provided. The electronic equipment chamber 30 may be a space in which electronic equipment components for operating the microwave oven 1 are provided, and in the electronic equipment chamber 30 formed at the back cavity 26, a magnetron 34 which generates microwaves for heating a food product, a high-voltage transformer and a high-voltage capacitor for supplying high-voltage current to the magnetron 34, and a convection part 60 that performs convection heating of the cooking chamber 22 may be provided.

The convection part 60 may be configured to include the convection heater 62 which is heated by electrical resistance, and a convection fan 64 that forces convection of heat generated by the convection heater 62 to the inside of the cooking chamber 22. When a convection function of the microwave oven 1 is performed, the convection heater 62 may be heated as power is applied to the convection heater 62, and heat generated by the convection heater 62 may circulate inside the cooking chamber 22 by rotation of the convection fan 64. In other words, the heat generated by the convection heater 62 may be introduced inside the cooking chamber 22 through the discharge holes 29 and then, the food product contained in the cooking chamber 22 may be cooked through a convection heating process that is discharged outside the cooking chamber 22 through suction holes 28.

Meanwhile, in the electronic equipment chamber 30 formed at a top surface of the top cavity 24, a control part (or processor) 50 that controls the overall operation of the heater 40 and the microwave oven 1, a fan assembly 70 which forces air flow to cool the electronic equipment chamber 30, and the like may be provided.

The control part 50 may be formed with a predetermined circuit by a plurality of circuit components such as resistance, a capacitor, an integrated circuit (IC) chip, MICOM, and the like.

The fan assembly 70 may cool a plurality of electronic equipment components provided in the electronic equipment chamber 30 by suctioning external air of the microwave oven 1 using rotational force, and a portion of the air described may be introduced inside the cooking chamber 22 through inlets 27 formed at a front side of the top cavity 24, and circulate inside the cooking chamber 22. The air that circulates in the cooking chamber 22 may be discharged outside of the cooking chamber 22 through the suction holes 28.

Meanwhile, a front surface plate 16 may be formed at a front direction of the cavity 20. The front surface plate 16 may form a front outer shape of the cavity 20, and may be coupled with a front end portion of the outer case 10. A door 80 may be rotatably coupled to the front surface plate 16. The door 80 may be hinge coupled at the lower end of the front surface plate 16, and selectively open and close the opened front surface of the cavity 20.

At a center part of the door 80, a see-through window 82 through which the user is able to view a cooking state of the food product in the cooking chamber 22 without having to rotate the door 80 may be formed. In addition, at a front surface of the door 80, a door handle 840 gripped by the user may be provided for opening and closing of the door 80 to be easy. Meanwhile, at a top part of the door 80, an operating part 90 through which the user inputs operating commands to cook a food product or keep warm the food product using the microwave oven 1 may be provided. The operating part 90 may be configured to include a plurality of buttons 92 for operating the microwave oven 1, and a display 94 that indicates an operation state. The display 94 may show a state of the microwave oven 1 set by the buttons 92.

Meanwhile, because the microwave oven 1 cooks at an uneven temperature due to its properties, there is difficulty in determining whether the cooking product has reached a cooking temperature desired by the user. Accordingly, various embodiments in which cooking at a cooking temperature desired by the user is possible by smartly identifying a representative temperature of the cooking product will be described below.

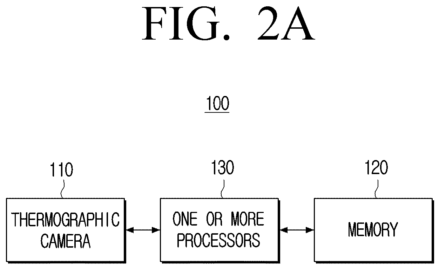

FIG. 2A is a block diagram illustrating a configuration of a cooking device according to one or more embodiments.

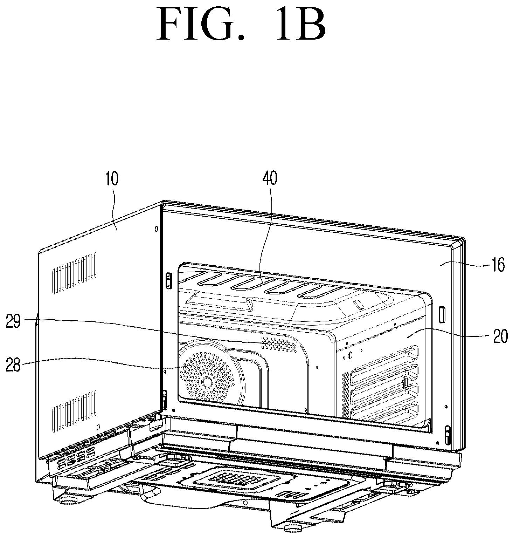

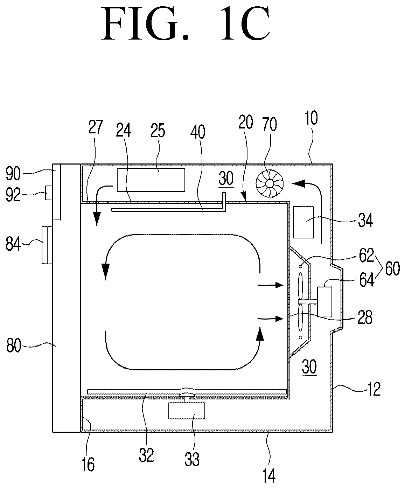

Referring to FIG. 2A, a cooking device 100 may include a thermographic camera 110, memory 120, and one or more processors 130. According to an example, the cooking device 100 may be implemented as the microwave oven 1 shown in FIG. 1.

The thermographic camera 110 may be a device that tracks and detects heat and shows the same through a screen at a glance. The thermographic camera 110 may generate an image by detecting radiant heat radiated by an object with heat unlike the eyes of a human or a typical camera which detects visible rays. The thermographic camera 110 may express different colors according to temperatures for users to visually identify the temperature. In other words, the thermographic camera 110 may be a camera that detects heat radiation radiated from an object and shows visualizing into various colors. The above may be provided at a position capable of capturing the inside of the cooking chamber. For example, the thermographic camera 110 may be provide at a position capable of capturing the turn table from a front side. Accordingly, an image obtained through the thermographic camera 110 may be a top-view image or an image captured at an angle close to the top-view image.

The memory 120 may store data necessary for various embodiments. The memory 120 may be implemented in a form of a memory embedded in a cooking device 100' according to a data storage use, or implemented in a form of a memory attachable to or detachable from the cooking device 100. For example, data for the driving of the cooking device 100 may be stored in the memory embedded in the cooking device 100', and data for an expansion function of the cooking device 100 may be stored in the memory attachable to or detachable from the cooking device 100. Meanwhile, the memory embedded in the cooking device 100 may be implemented as at least one of a volatile memory (e.g., a dynamic RAM (DRAM), a static RAM (SRAM), or a synchronous dynamic RAM (SDRAM)), or a non-volatile memory (e.g., one time programmable ROM (OTPROM), programmable ROM (PROM), erasable and programmable ROM (EPROM), electrically erasable and programmable ROM (EEPROM), mask ROM, flash ROM, a flash memory (e.g., NAND flash or NOR flash), a hard drive or a solid state drive (SSD)). In addition, the memory attachable to or detachable from the cooking device 100' may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., USB memory) connectable to a USB port, or the like.

According to an example, the memory 120 may store at least one instruction for controlling the cooking device 100 or a computer program including instructions.

According to another example, the memory 120 may store images, in other words, input images received from an external device (e.g., a source device), an external storage medium (e.g., a USB), an external server (e.g., WEBHARD), and the like. Alternatively, the memory 120 may store images obtained through the thermographic camera 110 which is provided in the cooking device 100. Here, the images may be 2D images, but is not limited thereto.

According to an embodiment, the memory 120 may be implemented as a single memory which stores data generated from various operations according to the disclosure. However, according to another embodiment, the memory 120 may be implemented so as to include a plurality of memories that respectively stores data of different types, or respectively stores data generated at different steps.

In the above-described embodiment, various data has been described as being stored in the memory 120 outside of the processor 130, but at least a portion of data described above may be stored in the memory inside of the processor 130 according to at least one implementation of the cooking device 100 or the processor 130.

The one or more processors 130 may control operations of the cooking device 100 overall. Specifically, the one or more processors 130 may control the operations of the cooking device 100 overall by being connected to each configuration of the cooking device 100. For example, the one or more processors 130 may control the overall operation of the cooking device 100 by being electrically connected to the display 94 and the memory 120. The one or more processors 130 may be configured as one processor or a plurality of processors.

The one or more processors 130 may perform, by executing at least one instruction stored in the memory 20, an operation of the cooking device 100 according to various embodiments.

The one or more processors 130 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 130 may control one or a random combination of other elements of the cooking device, and perform an operation associated with communication or data processing. The one or more processors 130 may execute one or more programs or instructions stored in the memory. For example, the one or more processors may perform, by executing one or more instructions stored in the memory, a method according to one or more embodiments of the disclosure.

When a method according to one or more embodiments of the disclosure includes a plurality of operations, the plurality of operations may be performed by one processor, or performed by a plurality of processors. For example, when a first operation, a second operation, and a third operation are performed by a method according to one or more embodiments, the first operation, the second operation, and the third operation may all be performed by a first processor, or the first operation and the second operation may be performed by the first processor (e.g., a generic-purpose processor) and the third operation may be performed by a second processor (e.g., an artificial intelligence dedicated processor).

The one or more processors 130 may be implemented as a single core processor that includes one core, or as one or more multicore processors that include a plurality of cores (e.g., a homogeneous multicore or a heterogeneous multicore). If the one or more processors 130 are implemented as multicore processors, each of the plurality of cores included in the multicore processors may include memory inside the processor such as an on-chip memory, and a common cache shared by the plurality of cores may be included in the multicore processors. In addition, each of the plurality of cores (or a portion from among the plurality of cores) included in the multicore processors may independently read and perform a program command for implementing a method according to one or more embodiments, or read and perform a program command for implementing a method according to one or more embodiments of the disclosure due to a whole (or a portion) of the plurality of cores being interconnected.

When a method according to one or more embodiments of the disclosure includes a plurality of operations, the plurality of operations may be performed by one core from among the plurality of cores or performed by the plurality of cores included in the multicore processors. For example, when a first operation, a second operation, and a third operation are performed by a method according to one or more embodiments, the first operation, the second operation, and the third operation may all be performed by a first core included in the multicore processors, or the first operation and the second operation may be performed by the first core included in the multicore processors and the third operation may be performed by a second core included in the multicore processors.

In the embodiments of the disclosure, the processor may refer to a system on chip (SoC), a single core processor, or multicore processors in which the one or more processors and other electronic components are integrated, or a core included in the single core processor or the multicore processors, and the core herein may be implemented as the CPU, the GPU, the APU, the MIC, the DSP, the NPU, the hardware accelerator, the machine learning accelerator, or the like, but the embodiments of the disclosure are not limited thereto. For convenience of description, the one or more processors 130 may be designated as the processor 130.

According to an embodiment, the processor 130 may obtain a thermographic image that captured the turn table on which a cooking product is placed by using the thermographic camera 110.

According to an embodiment, the processor 130 may segment each of a plurality of frames included in the thermographic image into a plurality of areas. According to an example, the processor 130 may segment at least one area of a whole frame area into pixel areas of a pre-set size based on temperature information included in each of the frames. For example, the processor 130 may segment an area with a temperature value greater than or equal to a pre-set value in each of the frames into pixel areas of a pre-set size. According to another example, the processor 130 may segment a whole frame area of each of the frames into pixel areas of a pre-set size regardless of temperature information.

According to an embodiment, the processor 130 may correct positions of the plurality of areas in each of the plurality of frames based on a rotation angle of the turn table corresponding to a time-point at which each of the plurality of frames is obtained. For example, the processor 130 may identify a rotation angle of the turn table based on the time interval at which the plurality of frames is obtained and a rotation speed of the turn table. The processor 130 may correct the positions of the plurality of areas by rotating the plurality of frames based on the rotation angle of the turn table corresponding to each of the plurality of frames.

According to an embodiment, the processor 130 may identify one area in a current frame from among the plurality of frames based on temperature information of the plurality of areas with the positions corrected in the plurality of frames.

According to an embodiment, the processor 130 may identify representative temperature information of the cooking product by applying weight values to temperature information of one area identified in the current frame. For example, the processor 130 may identify, based on the one area being identified in the current frame, representative temperature information of the cooking product based on temperature information of each area included in the identified one area and weight value information.

According to an example, the processor 130 may add, based on each of the plurality of frames being segmented into a plurality of areas, different identification information to each of the plurality of areas according to temperature information of each of the plurality of areas. For example, the processor 130 may add a first indicator to an area with a temperature value greater than or equal to a threshold value from among the plurality of areas and add a second indicator to an area with a temperature value less than the threshold value from among the plurality of areas. For example, the processor 130 may add a value of "1" to an area with a temperature value greater than or equal to the threshold value from among the plurality of areas and add a value of "0" to an area with a temperature value less than the threshold value from among the plurality of areas. However, the above is not limited thereto, and the first indicator and the second indicator may be determined as various values with which, when the relevant values are summed, the sum of which may be used to distinguish whether it is a sum of an area with a temperature value greater than or equal to a threshold value, or whether it is a sum of an area with a temperature value less than the threshold value. For example, the threshold value may be a temperature determined based on the cooking temperature (or target temperature) set during cooking. For example, the threshold value may be determined as a preset percentage value relative to the cooking temperature (or target temperature).

According to an example, the processor 130 may identify, based on the positions of the plurality of areas being corrected in the plurality of frames based on the rotation angle of the turn table, one area in the current frame based on identification information corresponding to the plurality of areas with the positions corrected in the plurality of frames. For example, the processor 130 may identify, based on the positions of the plurality of areas being corrected, one area in the current frame by combining the first indicator or the second indicator corresponding to the plurality of areas with the positions corrected in the plurality of frames. For example, when the positions of the plurality of areas are corrected, a value of "1" or a value of "0" corresponding to the plurality of areas with the position corrected in the plurality of frames may be added, and one area in the current frame may be identified based on a sum value corresponding to each of the plurality of areas. For example, the one area identified in the current frame may be an area with a high likelihood of being an area with the cooking product, and may be an area used in calculating a representative temperature of the cooking product.

According to an example, the processor 130 may identify, based on the one area in the current frame being identified, an area to apply different weight values according to a sum value for each of the plurality of areas included in the identified area. Then, the processor 130 may identify representative temperature information of the cooking product by applying different weight values to temperature information for each area in the current frame.

According to an embodiment, the processor 130 may obtain at least one of weight value information of a cooking product area (or likelihood information of the cooking product area) or temperature information of the cooking product area by inputting the plurality of frames and rotation angle information of the turn table corresponding to the plurality of frames in a trained artificial intelligence model.

According to an embodiment, the processor 130 may identify a representative temperature of the cooking product based on a cooking type set according to a user command and temperatures for each identified area in the current frame, identify whether the representative temperature of the cooking product reached a target temperature, and end cooking when the representative temperature of the cooking product is identified as having reached the target temperature. For example, the representative temperature of the cooking product may be determined according to a cooking type based on temperature information for each area included in the cooking product area.

According to an example, the cooking type may include at least one from among medium rare cooking, medium cooking, well or medium well cooking, or well done cooking, but is not limited thereto. Assuming that the cooking temperature (or target temperature) is set at a specific same temperature, different temperatures according to the cooking type may be used as representative temepratures.

For example, in the case of medium rare cooking, a top x% value may be used as the representative temperature. This is because relatively less time is spent until reaching the target temperature when using the top x% value.

For example, in the case of medium cooking, an average value may be used as the representative temperature. Typically, the average value may be an average temperature value of the cooking product and includes the characteristic of having a large deviation.

For example, in the case of well or medium well cooking, a median value may be used as the representative temperature. Typically, the median value has a characteristic of time being spent until the target temperature is reached.

For example, in the case of well done cooking, a bottom x% value may be used as the representative temperature. This is because relatively more time is spent until reaching the target temperature when using the bottom x% value.

According to an embodiment, the processor 130 may identify, based on the representative temperature information of the cooking product being identified, and based on an area (or a particle) of less than the threshold size with a difference greater than or equal to a threshold temperature with the representative temperature information in at least one of an internal area or an external area of the identified one area being identified, a relevant area as a contaminant area, and provide guide information for the identified contaminant area.

According to an embodiment, the processor 130 may identify which positions from among a camera, a turn table, or a cavity wall are positions of contaminants at based on at least one of whether there is rotation of the identified contaminant area and whether there is a temperature change in the plurality of frames, and provide guide information for positions of the identified contaminants.

According to an embodiment, the processor 130 may distinguish a cooking product and a container in which the cooking product is contained and provide a guide to the user by identifying the temperature of the cooking product. For example, the processor 130 may distinguish the cooking product and the container based on a temperature difference for each area, and an object exterior shape. For example, the processor 130 may provide a notification to the user to be careful if temperature of the container is greater than or equal to a specific temperature after cooking is completed. For example, the processor 130 may identify the cooking product area and a container area through at least one technology from among object recognition, object detection, object tracking, or image segmentation. For example, the cooking device 100 may identify the cooking product area and the container area using technology such as, for example, and without limitation, semantic segmentation which distinguishes and extracts objects included in a thermographic image by type according to necessity, instance segmentation which distinguishes by object even if it is an object of a same type and recognizes the object, a bounding box of a square form that includes detected objects when detecting objects included in an image, and the like.

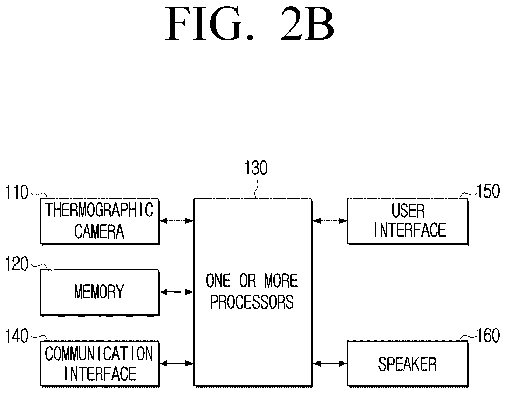

FIG. 2B is a block diagram illustrating a detailed configuration of a cooking device according to one or more embodiments.

Referring to FIG. 2A, the cooking device 100' may include the thermographic camera 110, memory 120, one or more processors 130, a communication interface 140, and a user interface 150. Detailed descriptions of configurations that overlap with the configurations shown in FIG. 2A from among the configurations shown in FIG. 2B will be omitted.

The communication interface 140 may include circuitry, and perform communication with an external device (server or user terminal). For example, the processor 130 may receive various data or information from an external device connected through the communication interface, and transmit various data or information to the external device.

The communication interface 140 may include at least one from among a Wi-Fi module, a Bluetooth module, a wireless communication module, an NFC module, an Ultra Wide Band (UWB) module. At this time, the wireless communication module may perform communication according to various communication standards such as, for example, and without limitation, IEEE, ZigBee, 3rd Generation (3G), 3rd Generation Partnership Project (3GPP), Long Term Evolution (LTE), 5th Generation (5G), and the like.

Meanwhile, the user interface 150 may be implemented as a device such as a button, a touch pad, and the like, or implemented as a touch screen capable of performing the above-described display function and an operation input function together therewith.

The speaker 160 may convert and amplify digital sound signals processed in the processor 130 into analog sound signals and output the same. For example, the speaker 160 may include at least one speaker unit, D/A converter, audio amplifier, and the like capable of outputting at least one channel. For example, the speaker may output various notifications, messages, information, and the like associated with guide information generated from the processor 130.

In addition thereto, the cooking device 100' may further include a microphone and a sensor.

The microphone may be a configuration for receiving input of a user voice or other sounds and converting into audio data. According to an example, the processor 130 may use audio received through the microphone as context data of the cooking device 100. However, according to another embodiment, the cooking device 100 may receive the user voice input through an external device through the communication interface 140.

The sensor may include sensors of various types such as, for example, and without limitation, a temperature sensor, a brightness sensor, a touch sensor, a proximity sensor, a humidity sensor, an infrared sensor, a biometric sensor, and the like.

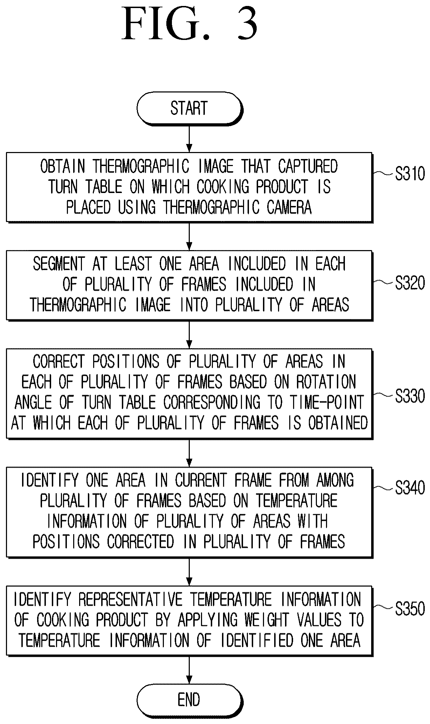

FIG. 3 is a flowchart illustrating a control method of a cooking device according to one or more embodiments.

Referring to FIG. 3, the cooking device 100 may obtain a thermographic image that captured the turn table on which the cooking product is placed using the thermographic camera 110 (S310).

Then, the cooking device 100 may segment at least one area included in each of the plurality of frames included in the thermographic image into a plurality of areas (S320).

Then, the cooking device 100 may correct positions of the plurality of areas in each of the plurality of frames based on a rotation angle of the turn table corresponding to a time-point at which each of the plurality of frames is obtained (S330). According to an example, the cooking device 100 may identify the rotation angle of the turn table based on the time interval at which the plurality of frames is obtained and the rotation speed of the turn table, and correct the positions of the plurality of frames based on the rotation angle of the turn table corresponding to each of the plurality of frames.

Then, the cooking device 100 may identify one area in a current frame from among the plurality of frames based on temperature information of the plurality of areas with the positions corrected in the plurality of frames (S340).

Then, the cooking device 100 may identify representative temperature information of the cooking product by applying weight values to temperature information of one area identified in the current frame (S350).

Meanwhile, in FIG. 3, although the order of all steps has been mapped for convenience of description, it should be noted that the order of steps that is not related to order or performable in parallel is not necessarily limited to the relevant order.

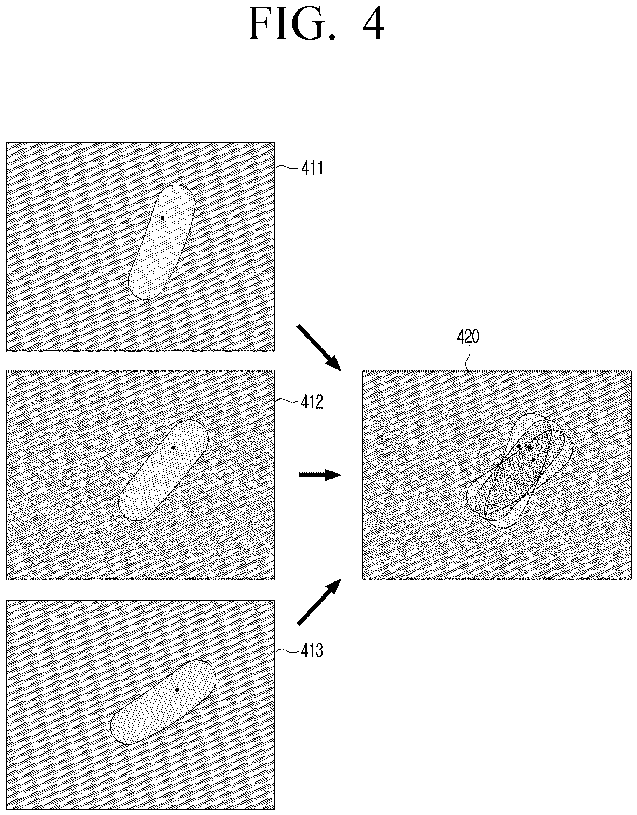

FIG. 4 is a diagram illustrating a method for obtaining representative temperature information of food products according to one or more embodiments.

According to an example, the cooking device 100 may identify the rotation angle of the turn table corresponding to the plurality of frames based on a time interval at which the plurality of frames is obtained and a rotation speed of the turn table. For example, as shown in FIG. 4, it may be assumed that a plurality of frames 411, 412, and 413 is obtained at 0s, 5s, and 10s. In this case, an angle at which a first frame 411 was obtained may be a reference angle, in other words, 0°, and angles at which a second frame 412, and a third frame are obtained may be 5s * v = z°, 10s * v = b°, respectively.

According to an example, the cooking device 100 may generate an image 420 in which pixel areas are overlapped by reverse rotating the second frame by a°, and reverse rotating the third frame by b°. The cooking device 100 may determine weight values corresponding to each pixel area based on a number of pixels overlapping the pixel area identified as the cooking product area. For example, the cooking device 100 may determine a large weight value for a relevant area the more the number of pixels are being overlapped. In this case, the cooking device 100 may identify temperatures for each area of the cooking product by applying determined weight values to temperature information identified in the current frame.

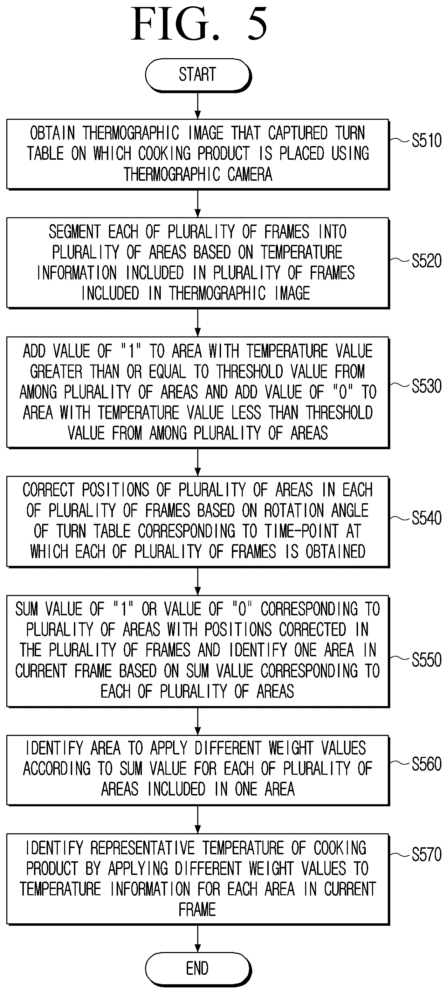

FIG. 5 is a flowchart illustrating a control method of a cooking device according to one or more embodiments.

According to an embodiment, the cooking device 100 may add, based on each of the plurality of frames being segmented into a plurality of areas, the first indicator to an area with a temperature value greater than or equal to a threshold value from among the plurality of areas and add the second indicator to an area with a temperature value less than the threshold value from among the plurality of areas. The cooking device 100 may identify, based on positions of the plurality of areas being corrected in the plurality of frames based on a rotation angle of the turn table, one area in the current frame by combining the first indicator or the second indicator corresponding to the plurality of areas with the position corrected in the plurality of frames. For example, the first indicator may have a value of "1", and the second indicator may have a value of "0".

Referring to FIG. 5, the cooking device 100 may obtain the thermographic image that captured the turn table on which the cooking product is placed using the thermographic camera 110 (S510).

Then, the cooking device 100 may segment at least one area included in each of the plurality of frames included in the thermographic image into a plurality of areas (S520).

Then, the cooking device 100 may add a value of "1" to an area with a temperature value greater than or equal to the threshold value from among the plurality of areas, and add a value of "0" to an area with a temperature value less than the threshold value from among the plurality of areas included in each of the plurality of frames (S530).

Then, the cooking device 100 may correct the positions of the plurality of areas in each of the plurality of frames based on the rotation angle of the turn table corresponding to the time-point at which each of the plurality of frames is obtained (S540).

Then, the cooking device 100 may sum the value of "1" or the value of "0' corresponding to the plurality of areas with the position corrected in the plurality of frames and identify one area in the current frame based on the sum value corresponding to each of the plurality of areas (S550).

Then, the cooking device 100 may identify an area to apply different weight values according to the sum value for each of the plurality of areas included in the one area (S560).

Then, the cooking device 100 may identify representative temperature information of the cooking product by applying weight values to temperature information of the identified one area in the current frame (S570).

Meanwhile, in FIG. 5, although the order of all steps has been mapped for convenience of description, it should be noted that the order of steps that is not related to order or performable in parallel is not necessarily limited to the relevant order.

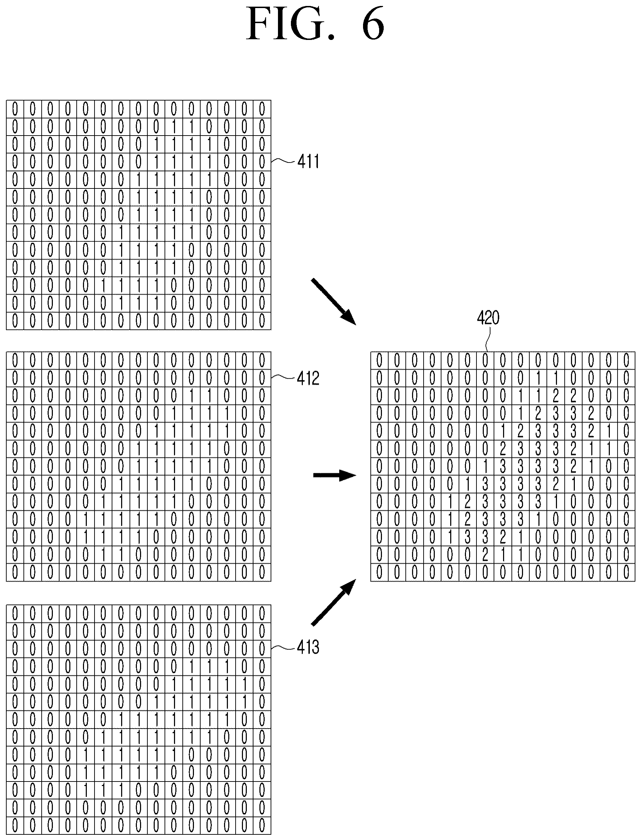

FIG. 6 is a diagram illustrating a method for obtaining temperature information of a cooking product area according to one or more embodiments.

According to an example, the cooking device 100 may add the value of "1" to the area with the temperature value greater than or equal to the threshold value from among the plurality of areas and add the value of "0" to the area with the temperature value less than the threshold value from among the plurality of areas included in each of the plurality of frames. For example, as shown in FIG. 4, indicator values according to temperatures for each area may be applied in each of the plurality of frames 411, 412, and 413.

According to an example, the cooking device 100 may identify the rotation angle of the turn table corresponding to the plurality of frames based on the time interval at which the plurality of frames is obtained and the rotation speed of the turn table. For example, as shown in FIG. 4, it may be assumed that the plurality of frames 411, 412, and 413 is obtained at 0s, 5s, and 10s. In this case, the angle at which the first frame 411 is obtained may be the reference angle, in other words, 0° and the angles at which the bottom surface, the second frame 412, and the third frame are obtained may be 5s * v = z°, 10s * v = b° respectively.

According to an example, the cooking device 100 may generate an image 420 in which pixel areas are overlapped by reverse rotating the second frame by a°, and reverse rotating the third frame by b°. In this case, the cooking device 100 may determine weight values corresponding to each pixel area based on indicator values corresponding to the pixels being overlapped, for example, the sum of the values "0" or "1". For example, the cooking device 100 may determine the larger weight value as the sum value increases in the image 420 in which the pixel areas are overlapped. In this case, the cooking device 100 may identify temperatures for each area of the cooking product by applying determined weight values to the temperature information identified in the current frame.

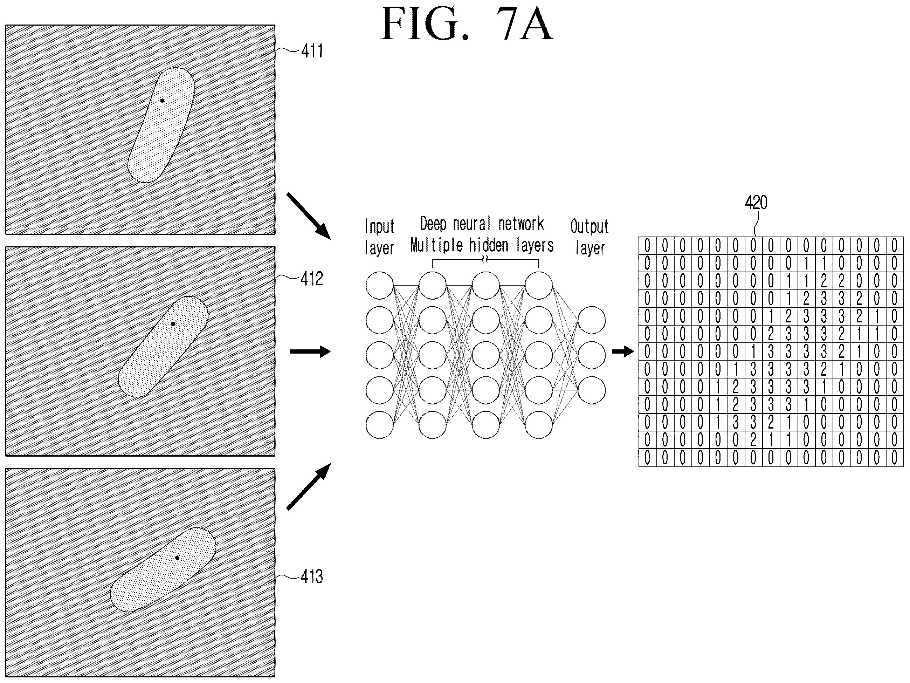

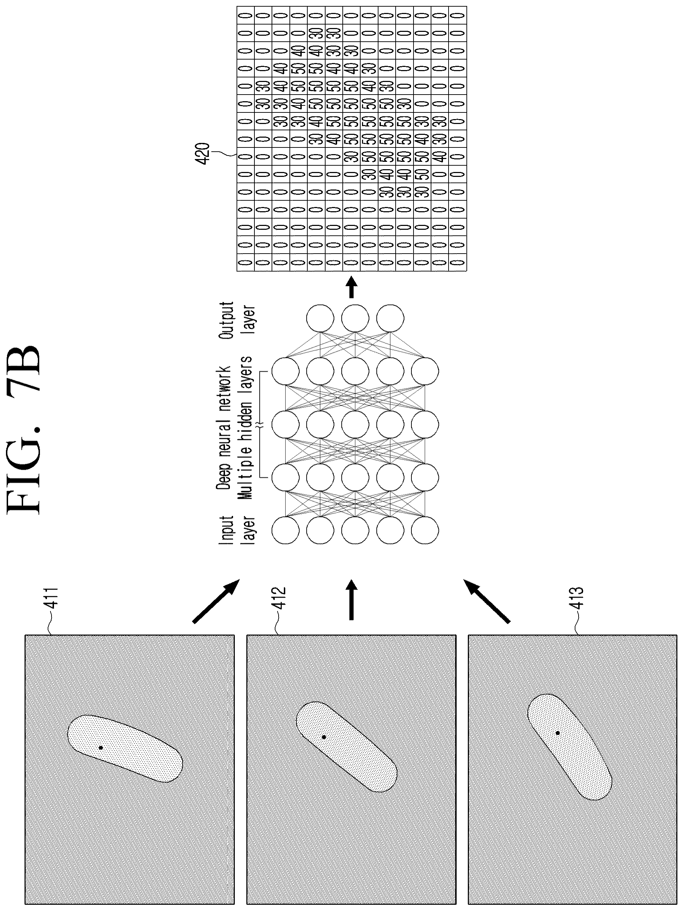

FIG. 7A and FIG. 7B are diagrams illustrating a method for obtaining temperatures of a cooking product area according to one or more embodiments.

According to an example, the cooking device 100 may obtain likelihood information (or weight value information) of the cooking product area by inputting the plurality of frames 411, 412, and 413 and rotation angle information of the turn table corresponding to the plurality of frames 411, 412, and 413 in the trained artificial intelligence model as shown in FIG. 7A. For example, the cooking device 100 may label the rotation angle of the turn table in each of the plurality of frames 411, 412, and 413, in other words, the rotation angle of each of the frames and input in the trained artificial intelligence model.

According to another example, the cooking device 100 may obtain temperature information of the cooking product area by inputting the plurality of frames 411, 412, and 413 and rotation angle of the turn table corresponding to the plurality of frames 411, 412, and 413 in the trained artificial intelligence model as shown in FIG. 7B. For example, the cooking device 100 may label the rotation angle of the turn table in each of the plurality of frames 411, 412, and 413, in other words, the rotation angle of each of the frames, and input in the trained artificial intelligence model. In FIG. 7B, although the temperature information is shown as included in numerical values in the output image, but the output image may be in a thermographic image form.

Here, the artificial intelligence module being trained referred herein may mean a pre-defined operation rule set to perform a desired feature (or, purpose) or an artificial intelligence model being created as a basic artificial intelligence model (e.g., an artificial intelligence model including a random parameter) is trained by a learning algorithm using a plurality of training data. The training may be carried out through a separate server and/or system, but is not limited thereto, and may be carried out in the cooking device. Examples of the learning algorithm may include a supervised learning, a unsupervised learning, a semi-supervised learning, or a reinforcement learning, but is not limited to the above-described examples.

Here, the artificial intelligence model may be implemented as, for example, and without limitation, a Convolutional Neural Network (CNN), a Recurrent Neural Network (RNN), a Restricted Boltzmann Machine (RBM), a Deep Belief Network (DBN), a Bidirectional Recurrent Deep Neural Network (BRDNN), a Deep-Q Networks, or the like, but is not limited thereto.

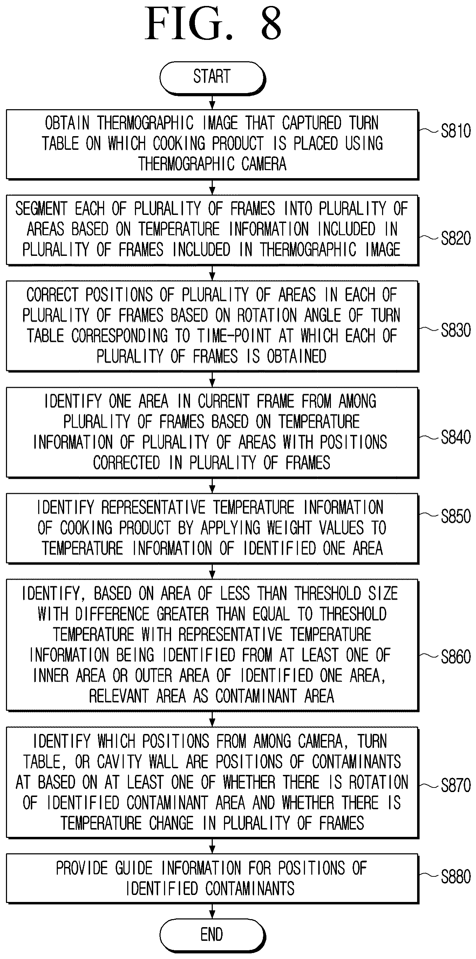

FIG. 8 is a flowchart illustrating a control method of a cooking device according to one or more embodiments.

Referring to FIG. 8, the cooking device 100 may obtain the thermographic image that captured the turn table on which the cooking product is placed using the thermographic camera 110 (S810).

Then, the cooking device 100 may segment at least one area included in each of the plurality of frames included in the thermographic image into a plurality of areas (S820).

Then, the cooking device 100 may correct the positions of the plurality of areas in each of the plurality of frames based on the rotation angle of the turn table corresponding to the time-point at which each of the plurality of frames is obtained (S830).

Then, the cooking device 100 may identify one area in the current frame from among the plurality of frames based on temperature information of the plurality of areas with the positions corrected in the plurality of frames (S840).

Then, the cooking device 100 may identify the representative temperature information of the cooking product by applying weight values to the temperature information of one area identified in the current frame (S850).

Then, the cooking device 100 may identify, based on the area of less than the threshold size with the difference greater than or equal to the threshold temperature with the representative temperature information being identified from at least one of the inner area or the outer area of the identified one area, the relevant area as the contaminant area (S860). For example, the cooking device 100 may determine objects having a result value different from the cooking product as the contaminants based on the size, the position, and temperature of the object, whether there is rotation of the object, and the like.

Then, the cooking device 100 may identify which positions from among the camera, the turn table, or the cavity wall are the positions of the contaminants at based on at least one of whether there is rotation of the identified contaminant area and whether there is a temperature change in the plurality of frames (S870).

Then, the cooking device 100 may provide guide information for the identified contaminant position.

Meanwhile, in FIG. 8, although the order of all steps has been mapped for convenience of description, it should be noted that the order of steps that is not related to order or performable in parallel is not necessarily limited to the relevant order.

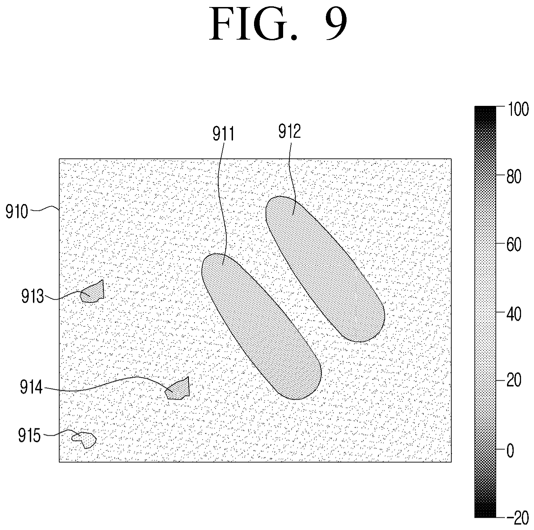

FIG. 9 is a diagram illustrating a method for detecting contaminants according to one or more embodiments.

According to an embodiment, the cooking device 100 may identify, based on the representative temperature information for each area being identified in the current frame, whether contaminants have been generated through image labeling.

For example, referring to FIG. 9, the cooking device 100 may identify objects 911 and 912 of a certain size or more as the cooking products through image labeling in a thermographic frame 910, and identify objects 913, 914, and 915 of less than a certain size as the contaminants. Image labeling may mean a method for grouping pixels having pixel vales of the same temperature as the surroundings in the image and assigning numbers for each group. For example, a connected component labeling (CCL) method may be used, but is not necessarily limited thereto.

Meanwhile, in the above-described embodiment, although a method for identifying whether there are contaminants generated based on representative temperatures that used the plurality of frames have been described, whether there are contaminants generated may be determined through image labeling based on the temperature information for each area included in a single frame.

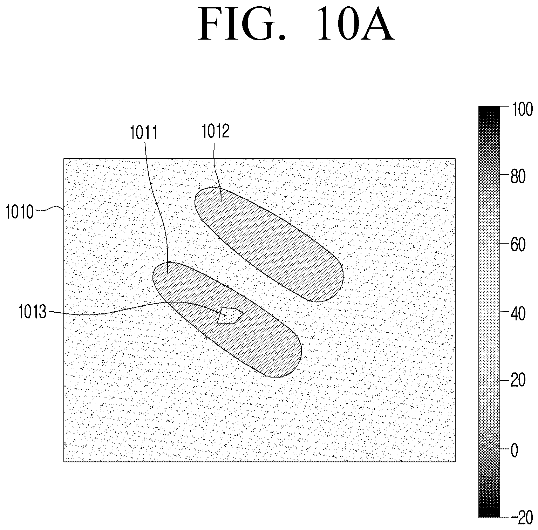

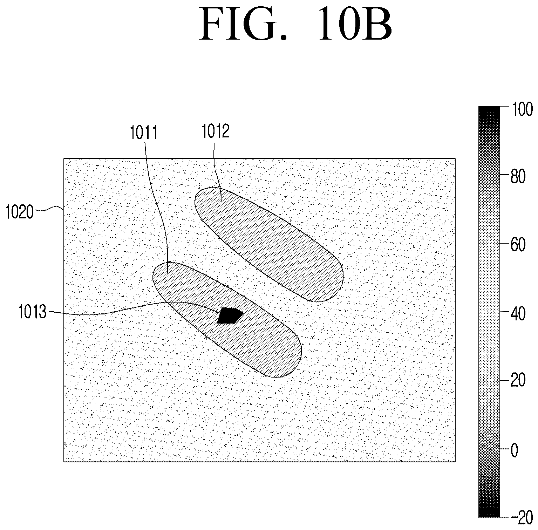

FIG. 10A and FIG. 10B are diagrams illustrating a method for detecting contaminants according to one or more embodiments.

According to an embodiment, the cooking device 100 may identify, based on the representative temperature information for each area being identified in the current frame, whether there are contaminants generated through image labeling.

For example, referring to FIG. 10A, the cooking device 100 may identify objects 1011 and 1012 of a certain size or more as the cooking products through image labeling in a thermographic frame 1010, and identify an object 1013 of less than the certain size as a contaminant.

However, as shown in FIG. 9, the contaminants 913, 914, and 915 may be positioned separately from the main cooking products 911 and 912, but as shown in FIG. 10A, the contaminant 1013 may be positioned overlapped with the main cooking products 1011 and 1012. For example, the cooking device 100 may determine as a contaminant if a specific area on the main cooking products 1011 and 1012 has a higher temperature. In this case, because the contaminant 1013 may affect calculation of a representative temperature of the relevant cooking product 1012, the representative temperature of the relevant cooking product 1012 may be calculated by excluding from a region of interest (Rol) as shown in FIG. 10B.

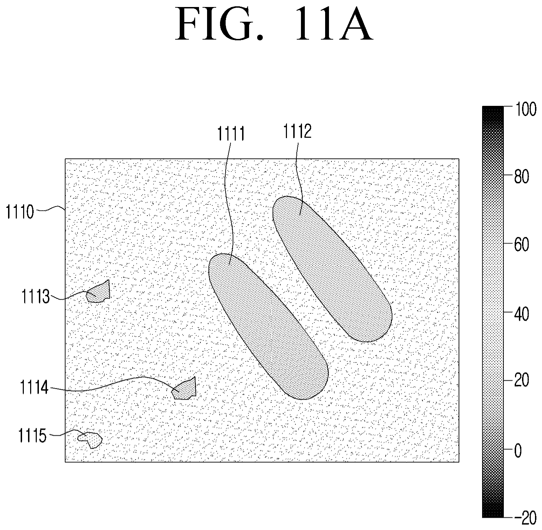

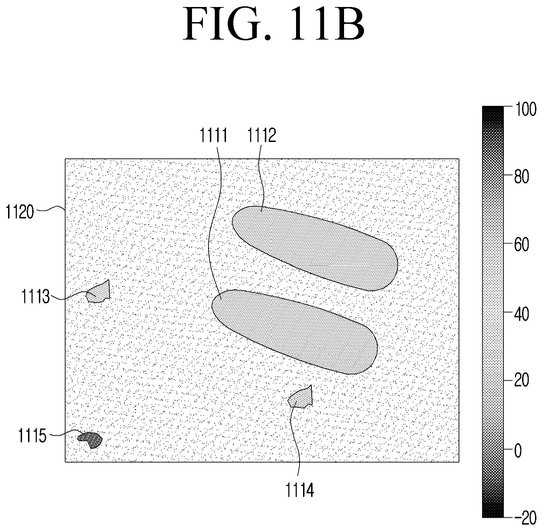

FIG. 11A and FIG. 11B are diagrams illustrating a method for detecting contaminants according to one or more embodiments.

According to an embodiment, the cooking device 100 may identify which positions from among the camera, the turn table, or the cavity wall are the positions of the contaminants at based on at least one of whether there is rotation of the identified contaminant area and whether there is temperature change, and provide guide information for the identified contaminant position. For example, the cooking device 100 may identify the positions of contaminants based on a plurality of thermographic frames obtained according to the rotation of the turn table. For example, the cooking device 100 may identify the contaminant position by determining whether there is rotation of the contaminants (a turn table method) and whether there is heating (a flatbed method).

For example, referring to FIG. 11A, the cooking device 100 may identify objects 1111 and 1112 of a certain size or more as cooking products through image labeling in a first thermographic frame 1010, and identify objects 1113, 1114, and 1115 of less than the certain size as contaminants.

Referring to FIG. 11B, the cooking device 100 may identify that a first contaminant 1113 is not heated, the position thereof is not rotated and the same in a second thermographic frame 1020. In this case, the cooking device 100 may identify the first contaminant 1113 as a contaminant positioned at the thermographic camera 110.

Referring to FIG. 11B, the cooking device 100 may identify that a second contaminant 1114 is not heated and the position thereof is rotated in the second thermographic frame 1020. In this case, the cooking device 100 may identify the second contaminant 1114 as a background contaminant in a rotatable position, for example, a contaminant on the turn table.

Referring to FIG. 11B, a third contaminant 1115 being heated, the position thereof not being rotated and being the same may be identified in the second thermographic frame 1020. In this case, the cooking device 100 may identify the third contaminant 1115 as a background contaminant in a position that is not rotatable, for example, a contaminant on a heatable cavity wall.

Meanwhile, according to an embodiment, the cooking device 100 may provide a different guide to the user according to whether the contaminants are identified before cooking the cooking product or during cooking. For example, the cooking device 100 may guide to start cooking after removing the contaminants if the contaminants are identified before cooking, and forcibly end cooking if a level of danger is determined as high based on whether splatter is generated, a size of a contaminated area, and the like if the contaminants are identified during cooking, or provide a corresponding guide to the user.

According to an embodiment, the cooking device 100 may identify whether contaminants are present inside the cooking chamber and positions of the contaminants when a cleaning mode is started, and guide at least one of the positions of the contaminants and the cleaning method to the user. For example, the cooking device 100 may guide to perform heating after placing a cup of water therein, and provide a re-guidance according to whether contaminant materials have been removed. For example, the cooking device 100 may guide, based on it being determined as a device malfunction, a corresponding description to the user and guide to reserve for service.

According to the various embodiments described above, despite uneven cooking characteristics of the microwave oven, representative temperature values of the cooking products may be smartly set, and a user customized cooking may be provided by providing a selecting opportunity to the user. In addition, through a contaminant guide of the microwave oven, maintaining a level of cleanliness inside thereof may be possible, and reservation for service may be easily guided when the device malfunctions.

Meanwhile, the methods according to the various embodiments of the disclosure described above may be implemented with only a software upgrade, or a hardware upgrade for the cooking device of the related art.

In addition, the various embodiments of the disclosure described above may be performed through an embedded server provided in the cooking device, or an external server of the cooking device.

Meanwhile, according to an embodiments of the disclosure, the various embodiments described above may be implemented with software including instructions stored in a machine-readable storage media (e.g., computer). The machine may call the stored instructions from a storage medium, and as a device operable according to the called instructions, may include the cooking device (e.g., cooking device (A)) according to the above-mentioned embodiments. Based on the instructions being executed by the processor, the processor may directly or using other elements under the control of the processor perform a function corresponding to the instructions. The instructions may include a code generated by a compiler or executed by an interpreter. A machine-readable storage medium may be provided in a form of a non-transitory storage medium. Herein, 'non-transitory' merely means that the storage medium is tangible and does not include a signal, and the term does not differentiate data being semi-permanently stored or being temporarily stored in the storage medium.

In addition, according to an embodiment of the disclosure, a method according to the various embodiments described above may be provided included a computer program product. The computer program product may be exchanged between a seller and a purchaser as a commodity. The computer program product may be distributed in a form of the machine-readable storage medium (e.g., a compact disc read only memory (CD-ROM)), or distributed online through an application store (e.g., PLAYSTORE^{™}). In the case of online distribution, at least a portion of the computer program product may be stored at least temporarily in a storage medium such as a server of a manufacturer, a server of an application store, or a memory of a relay server, or temporarily generated.

In addition, each of the elements (e.g., a module or a program) according to the various embodiments described above may be configured as a single entity or a plurality of entities, and a portion of sub-elements of the above-mentioned relevant sub-elements may be omitted, or other sub-elements may be further included in the various embodiments. Alternatively or additionally, a portion of the elements (e.g., modules or programs) may be integrated into one entity to perform the same or similar functions performed by the respective relevant elements prior to integration. Operations performed by a module, a program, or another element, in accordance with the various embodiments, may be executed sequentially, in a parallel, repetitively, or in a heuristic manner, or at least a portion of the operations may be executed in a different order, omitted or a different operation may be added.

While the disclosure has been illustrated and described with reference to exemplary embodiments thereof, it will be understood that the embodiments are intended to be illustrative, not limiting. It will be understood by those skilled in the art that various changes in form and details may be made therein without departing from the true spirit and full scope of the disclosure, including the appended claims and their equivalents.

## Claims

1. A cooking device that cooks food using electromagnetic waves comprises:
a thermographic camera;
memory storing one or more instructions; and
one or more processors,
wherein the one or more processors, by executing the one or more instructions, cause the cooking device to:
obtain a thermographic image that captured a turn table on which a cooking product is placed using the thermographic camera,
segment at least one area included in each of a plurality of frames included in the thermographic image into a plurality of areas,
correct positions of the plurality of areas in each of the plurality of frames based on a rotation angle of the turn table corresponding to a time-point at which each of the plurality of frames is obtained,
identify, in the plurality of frames, one area in a current frame based on temperature information of a plurality of areas with the positions corrected, and
identify representative temperature information of the cooking product by applying weight values to temperature information of the identified one area in the current frame.

2. The cooking device of claim 1, wherein
the one or more processors, by executing the one or more instructions, cause the cooking device to:
identify, based on the one area being identified in the current frame, representative temperature information of the cooking product based on temperature information for each area included in the identified one area and weight value information.

3. The cooking device of claim 1, wherein
the one or more processors, by executing the one or more instructions, cause the cooking device to:
add, based on each of the plurality of frames being segmented into a plurality of areas, a first indicator to an area with a temperature value greater than or equal to a threshold value from among the plurality of areas and add a second indicator to an area with a temperature value less than the threshold value from among the plurality of areas, and
identify, based on positions of the plurality of areas being corrected in the plurality of frames based on a rotation angle of the turn table, the one area in the current frame by combining the first indicator or the second indicator corresponding to the plurality of areas with the positions corrected in the plurality of frames.

4. The cooking device of claim 1, wherein
the one or more processors, by executing the one or more instructions, cause the cooking device to:
add, based on each of the plurality of frames being segmented into a plurality of areas, a value of "1" to an area with a temperature value greater than or equal to a threshold value from among the plurality of areas and add a value of "0" to an area with a temperature value less than the threshold value from among the plurality of areas, and
add, based on positions of the plurality of areas being corrected in the plurality of frames based on a rotation angle of the turn table, a value of "1" or a value of "0" corresponding to the plurality of areas with the positions corrected in the plurality of frames, and identify the one area in the current frame based on a sum value corresponding to each of the plurality of areas.

5. The cooking device of claim 4, wherein
the one or more processors, by executing the one or more instructions, cause the cooking device to:
identify, based on the one area being identified in the current frame, weight values for each area according to the sum value for each of the plurality of areas included in the one area, and
identify representative temperature information of the cooking product by applying different weight values to temperature information for each area in the current frame.

6. The cooking device of claim 1, wherein
the one or more processors, by executing the one or more instructions, cause the cooking device to:
identify a rotation angle of the turn table based on a time interval at which the plurality of frames is obtained and a rotation speed of the turn table, and
correct positions of the plurality of areas by rotating the plurality of frames based on a rotation angle of the turn table corresponding to each of the plurality of frames.

7. The cooking device of claim 1, wherein
the one or more processors, by executing the one or more instructions, cause the cooking device to:
obtain at least one of weight value information or temperature information of the one area by inputting the plurality of frames and rotation angle information of the turn table corresponding to the plurality of frames in a trained artificial intelligence model.

8. The cooking device of claim 1, wherein
the one or more processors, by executing the one or more instructions, cause the cooking device to:
identify a representative temperature of the cooking product based on a cooking type set according to a user command and temperatures for each identified area in the current frame, and identify whether a representative temperature of the cooking product reaches a target temperature, and
end cooking when a representative temperature of the cooking product is identified as having reached the target temperature.

9. The cooking device of claim 1, wherein
the one or more processors, by executing the one or more instructions, cause the cooking device to:
identify, based on representative temperature information of the cooking product being identified, and based on an area of less than a threshold size with a difference greater than or equal to a threshold temperature with the representative temperature information being identified from at least one of an inner area or an outer area of the identified one area, relevant area as a contaminant area, and
provide guide information for the identified contaminant area.

10. The cooking device of claim 1, wherein
the one or more processors, by executing the one or more instructions, cause the cooking device to:
identify which positions from among a camera, a turn table, or a cavity wall are positions of contaminants at based on at least one of whether there is rotation of the identified contaminant area and whether there is a temperature change in the plurality of frames, and
provide guide information for positions of the identified contaminants.

11. A control method of a cooking device that cooks food using electromagnetic waves, the method comprising:
obtaining a thermographic image that captured a turn table on which a cooking product is placed using a thermographic camera;
segmenting at least one area included in each of a plurality of frames included in the thermographic image into a plurality of areas;
correcting positions of the plurality of areas in each of the plurality of frames based on a rotation angle of the turn table corresponding to a time-point at which each of the plurality of frames is obtained;
identifying, in the plurality of frames, one area in a current frame based on temperature information of a plurality of areas with the positions corrected; and
identifying representative temperature information of the cooking product by applying weight values to temperature information of the identified one area in the current frame.

12. The method of claim 11, wherein
the identifying representative temperature information of the cooking product comprises:
identifying, based on the one area being identified in the current frame, representative temperature information of the cooking product based on temperature information for each area included in the identified one area and weight value information.

13. The method of claim 11, wherein
the identifying one area in a current frame in the plurality of frames comprises:
adding, based on each of the plurality of frames being segmented into a plurality of areas, a first indicator to an area with a temperature value greater than or equal to a threshold value from among the plurality of areas and adding a second indicator to an area with a temperature value less than the threshold value from among the plurality of areas; and
identifying, based on positions of the plurality of areas being corrected in the plurality of frames based on a rotation angle of the turn table, the one area in the current frame by combining the first indicator or the second indicator corresponding to the plurality of areas with the positions corrected in the plurality of frames.

14. The method of claim 11, wherein
the identifying one area in a current frame in the plurality of frames comprises:
adding, based on each of the plurality of frames being segmented into a plurality of areas, a value of "1" to an area with a temperature value greater than or equal to a threshold value from among the plurality of areas and adding a value of "0" to an area with a temperature value less than the threshold value from among the plurality of areas; and
adding, based on positions of the plurality of areas being corrected in the plurality of frames based on a rotation angle of the turn table, a value of "1" or a value of "0" corresponding to the plurality of areas with the positions corrected in the plurality of frames, and identifying the one area in the current frame based on a sum value corresponding to each of the plurality of areas.

15. A non-transitory computer-readable medium that stores computer instructions for a cooking device to perform an operation when executed by a processor of the cooking device that cooks food using electromagnetic waves, the operation comprising:
obtaining a thermographic image that captured a turn table on which a cooking product is placed using a thermographic camera;
segmenting at least one area included in each of a plurality of frames included in the thermographic image into a plurality of areas;
correcting positions of the plurality of areas in each of the plurality of frames based on a rotation angle of the turn table corresponding to a time-point at which each of the plurality of frames is obtained;
identifying, in the plurality of frames, one area in a current frame based on temperature information of a plurality of areas with the positions corrected; and
identifying representative temperature information of the cooking product by applying weight values to temperature information of the identified one area in the current frame.
